# EUROPÄISCHE PATENTANMELDUNG

(11) **EP 4 744 813 A1**
(43) Veröffentlichungstag der Anmeldung: **20.05.2026**
(21) Anmeldenummer: 25214159.3
(22) Anmeldetag: 07.11.2025
(51) Int. Cl.: B23K 26/14

(54) **KOLLISIONSGESCHÜTZTE DÜSENEINHEIT FÜR EINEN LASERBEARBEITUNGSKOPF ZUR LATERALEN SCHUTZGASZUFUHR UND LASERBEARBEITUNGSKOPF MIT DERSELBEN**

(30) Priorität: 18.11.2024 DE 102024133695
(71) Anmelder: Precitec GmbH & Co. KG, 76571 Gaggenau-Bad Rotenfels (DE)
(72) Erfinder: BOLEY, Steffen, 71229 Leonberg (DE); KUNZ, Felicitas, 76135 Karlsruhe (DE)
(74) Vertreter: Ter Meer Steinmeister & Partner

(57) **Zusammenfassung**

Die vorliegende Offenbarung betrifft eine Düseneinheit zur lateralen Schutzgaszufuhr für einen Laserbearbeitungskopf, die Düseneinheit umfassend: eine Schutzgasdüse, eine Haltevorrichtung, an der die Schutzgasdüse befestigt ist, einen Adapter zur Befestigung der Haltevorrichtung am Laserbearbeitungskopf, wobei die Haltevorrichtung und der Adapter mittels Magnetkraft lösbar aneinander gekoppelt sind. Die vorliegende Offenbarung betrifft ferner einen Laserbearbeitungskopf mit einer solchen Düseneinheit.

## Beschreibung

Die vorliegende Erfindung betrifft eine Düseneinheit zur lateralen Schutzgaszufuhr für einen Laserbearbeitungskopf, insbesondere für einen Laserschweißkopf, und einen Laserbearbeitungskopf, insbesondere einen Laserschweißkopf, mit einer solchen Düseneinheit.

### Technischer Hintergrund

Laserauftragsschweißen (nachfolgend auch kurz "Auftragsschweißen") ist ein additives Herstellungsverfahren, bei dem ein Auftragsmaterial in eine Bearbeitungszone an einem Werkstück, beispielsweise ein metallisches Werkstück, geführt, mittels eines Laserstrahl geschmolzen und mit dem Werkstück verbunden, insbesondere verschweißt, wird. Ein Laserschweißkopf strahlt einen von einer Laserquelle oder einem Ende einer Laserleitfaser austretenden Laserstrahl in die Bearbeitungszone am Werkstück ein. Wird das Auftragsmaterial als Draht zugeführt, kann auch von einem (Laser-)Drahtauftragschweißen gesprochen werden. In diesem Fall führt beispielsweise eine Drahtführungsvorrichtung den Draht (auch als Schweißdraht bezeichnet) in die Bearbeitungszone zu.

Bei der Laserbearbeitung, insbesondere beim Laserschweißen bzw. Laserauftragschweißen, ist es von Vorteil, ein Schutzgas in die Bearbeitungszone zuzuführen, um beispielsweise das Material des Werkstücks oder das Auftragsmaterial vor der Umgebungsatmosphäre zu schützen. Die Schutzgaszufuhr kann koaxial erfolgen. Dabei ist der Schutzgasstrom zumindest abschnittsweise rotations- oder drehsymmetrisch zur Strahlachse des Laserstrahls. Die Schutzgaszufuhr kann auch lateral bzw. seitlich erfolgen. Dabei wird das Schutzgas außerhalb der Strahlachse des Laserstrahls in die Bearbeitungszone bzw. in einem Winkel zur Strahlachse in die Bearbeitungszone zugeführt.

Für die laterale Schutzgaszufuhr wird für gewöhnlich eine Schutzgasdüse verwendet, die außerhalb des Gehäuses des Laserbearbeitungskopfes angeordnet ist bzw. seitlich am Gehäuse des Laserbearbeitungskopfes befestigt ist. Hierbei muss die Schutzgasdüse gegen Kollisionen mit anderen Gegenständen, beispielsweise mit dem Werkstück, aufgeschweißten Strukturen oder Elementen einer Laserbearbeitungsanlage, geschützt werden. Kollisionen können als unbeabsichtigte Berührungen der Schutzgasdüse mit anderen Gegenständen, insbesondere dem Werkstück, betrachtet werden. Der Schutz ist erforderlich, um die Schutzgasdüse, den Laserbearbeitungskopf, das Werkstück und die Maschinevor Beschädigungen aufgrund der Kollisionen zu schützen.

### Zusammenfassung der Erfindung

Es ist eine Aufgabe der vorliegenden Erfindung, eine verbesserte Düseneinheit zur lateralen Schutzgaszufuhr für einen Laserbearbeitungskopf, insbesondere einen Laserschweißkopf, bereitzustellen.

Es ist insbesondere eine Aufgabe der Erfindung, eine Düseneinheit mit einem verbesserten Kollisionsschutz bereitzustellen. Es ist insbesondere eine Aufgabe, eine Düseneinheit bereitzustellen, die eine Beschädigung einer Schutzgasdüse bei Kollision mit einem anderen Gegenstand verhindert.

Es ist ferner eine Aufgabe der Erfindung, eine Düseneinheit mit einer verbesserten Einstellbarkeit bereitzustellen. Es ist ferner eine Aufgabe der Erfindung, eine Düseneinheit bereitzustellen, die eine verbesserte Anpassbarkeit für verschiedene Durchmesser der Schutzgasdüse aufweist.

Es ist ferner eine Aufgabe, einen Laserbearbeitungskopf, insbesondere einen Laserschweißkopf, mit einer solchen Düseneinheit bereitzustellen.

Mindestens eine dieser Aufgaben wird durch den Gegenstand der unabhängigen Ansprüche gelöst. Vorteilhafte Ausführungsformen und Weiterentwicklungen sind Gegenstand der entsprechenden abhängigen Ansprüche.

Die vorliegende Erfindung beruht auf der Erkenntnis, dass herkömmliche Schutzgasdüsen starr mit dem Laserbearbeitungskopf verbunden sind. Zudem sind herkömmliche Düseneinheiten oft als ein starres Bauteil, also ein Bauteil, bei dem alle Elemente fest miteinander verbunden sind, ausgebildet. Der Grundgedanke der vorliegenden Erfindung ist es, eine Schutzgasdüse so an dem Laserbearbeitungskopf zu befestigen, sodass sich die Verbindung bei einer Kollision der Schutzgasdüse mit einem Hindernis bzw. bei einer (ungewollten) äußeren Krafteinwirkung auf die Schutzgasdüse lösen kann. Dadurch wird vermieden, dass die Schutzgasdüse sich verbiegt und dadurch beschädigt oder gar zerstört wird. Gemäß der vorliegenden Erfindung sind hierfür zwei Elemente der Düseneinheit magnetisch aneinandergekoppelt, derart, dass die Schutzgasdüse an einem Laserbearbeitungskopf lösbar koppelbar bzw. befestigbar ist. Mit "lösbar" ist in der vorliegenden Offenbarung "reversibel lösbar" gemeint. Darüber hinaus ermöglicht dies einen einfachen Austausch von Teilen der Düseneinheit, insbesondere von der Schutzgasdüse selbst.

Gemäß einem ersten Aspekt der vorliegenden Offenbarung ist eine Düseneinheit zur lateralen Schutzgaszufuhr für einen Laserbearbeitungskopf angegeben, die Düseneinheit umfassend: eine Schutzgasdüse, eine Haltevorrichtung, an der die Schutzgasdüse befestigt ist, und einen Adapter zur Befestigung der Düseneinheit am Laserbearbeitungskopf. Die Haltevorrichtung und der Adapter sind mittels Magnetkraft lösbar aneinandergekoppelt. Das Koppeln der Haltevorrichtung und des Adapters mittels der Magnetkraft kann auch als magnetische Kopplung bezeichnet werden.

Gemäß einem weiteren Aspekt der vorliegenden Offenbarung ist ein Laserbearbeitungskopf angegeben, umfassend: ein Gehäuse, und eine Düseneinheit gemäß einem Aspekt oder gemäß einer Ausführungsform der vorliegenden Offenbarung, wobei der Adapter am Gehäuse, insbesondere an einer Außenseite und/oder an einer Auskragung des Gehäuses, befestigt ist.

Aspekte und Ausführungsformen der vorliegenden Offenbarung können ein oder mehrere der nachfolgenden optionalen Merkmale aufweisen.

Die Haltevorrichtung ist somit lösbar an den Adapter gekoppelt bzw. lösbar mit diesem verbunden. Auf diese Weise kann sich die Schutzgasdüse (und die Haltevorrichtung) im Falle einer Kollision bzw. äußeren Krafteinwirkung der Schutzgasdüse mit einem Objekt unabhängig von anderen Komponenten des Laserbearbeitungskopfs, wie etwa einer Drahtzuführung, vom Laserbearbeitungskopf lösen.

Die Schutzgasdüse kann lösbar an der Haltervorrichtung befestigt sein oder kann fest mit der Haltevorrichtung verbunden sein. Die Schutzgasdüse und die Haltevorrichtung können einteilig ausgebildet und/oder können als Verschleißteil ausgebildet sein.

Das Gehäuse kann einen Flansch, eine nach außen abstehende Kante und/oder Auskragung zur Befestigung des Adapters bzw. der Düseneinheit aufweisen.

Der Adapter kann lösbar am Gehäuse, insbesondere an einem Flansch, einer nach außen abstehenden Kante und/oder einer Auskragung des Gehäuses, befestigt sein und/oder befestigt werden. Der Adapter kann zur lösbaren Befestigung der Düseneinheit bzw. der Haltevorrichtung am Gehäuse des Laserbearbeitungskopfs eingerichtet sein, beispielsweise mittels Schraubverbindung oder Bolzenverbindung oder Klemmverbindung. Der Adapter kann als Klemme, insbesondere als C-Klemme und/oder als Schraubklemme, ausgebildet sein.

Eine Größe bzw. Stärke der Magnetkraft kann so gewählt sein, dass sich der Adapter und die Haltevorrichtung ab einer vorgegebenen äußeren Krafteinwirkung (z.B. auf die Schutzgasdüse) voneinander lösen. Die vorgegebene äußere Krafteinwirkung kann eine äußere Krafteinwirkung mit einem vorgegebenen Wert und/oder in einer vorgegebenen Richtung angeben bzw. sein. Die vorgegebene äußere Krafteinwirkung kann eine unbeabsichtigte bzw. ungewollte bzw. plötzliche äußere Krafteinwirkung sein. Die äußere Krafteinwirkung kann von einer Kollision der Schutzgasdüse mit einem weiteren Gegenstand, insbesondere dem Werkstück, herrühren und kann auf weitere Elemente der Düseneinheit, beispielsweise auf die Haltevorrichtung oder den Adapter, übertragen werden. Beim Bestimmen, ob eine äußere Krafteinwirkung vorliegt, kann die Magnetkraft und/oder Schwerkraft, die normalerweise im gekoppelten Zustand auf die Haltevorrichtung mit der Schutzgasdüse wirkt, außer Acht gelassen werden. Die Größe der Magnetkraft kann so gewählt sein, dass die Schwerkraft, die auf die Haltevorrichtung und die Schutzgasdüse (insbesondere im gekoppelten Zustand) wirkt, nicht zum Lösen der magnetischen Kopplung führt.

Das Lösen der magnetischen Kopplung kann bedeuten, dass sich die Haltevorrichtung und der Adapter, insbesondere eine Magneteinheit und ein Kopplungsbereich, insbesondere eine Kopplungsfläche des Kopplungsbereichs und ein Magnettopf bzw. darin angeordneter Magnet der Magneteinheit, so weit voneinander entfernen, dass die koppelnde Magnetkraft durch andere Kräfte, beispielsweise die auf die Haltevorrichtung und die Schutzgasdüse wirkende Schwerkraft und die von außen wirkende Kraft, überwunden wird. Nach dem Lösen der magnetischen Kopplung können der Adapter und die Haltevorrichtung, insbesondere die Kopplungsfläche und der Magnettopf, voneinander getrennt sein bzw. sich nicht mehr berühren.

Durch das Lösen kann sichergestellt werden, dass sich die Haltevorrichtung bei einer Kollision der Düseneinheit bzw. der Schutzgasdüse vom Adapter lösen kann. Dadurch wird verhindert, dass sich Elemente der Düseneinheit, insbesondere die Schutzgasdüse oder die Haltevorrichtung, aufgrund der äußeren Krafteinwirkung verbiegen und beschädigt werden.

Einer von dem Adapter und der Haltevorrichtung kann als Magneteinheit ausgebildet sein, und der andere von dem Adapter und der Haltevorrichtung kann als ferromagnetische Einheit ausgebildet sein. Durch die Magneteinheit und die ferromagnetische Einheit kann die Magnetkraft zum Koppeln des Adapters und der Haltevorrichtung bereitgestellt werden. Die Magneteinheit kann einen Magneten umfassen. Die Magneteinheit kann ferner einen Magnettopf umfassen, in dem der Magnet angeordnet ist. Die ferromagnetische Einheit kann einen Kopplungsbereich zur magnetischen Kopplung mit der Magneteinheit umfassen. Die ferromagnetische Einheit und/oder der Kopplungsbereich kann einen ferromagnetischen Abschnitt aus ferromagnetischem Material umfassen oder aus ferromagnetischem Material bestehen.

Der Magnet kann einen rechteckigen Querschnitt haben und/oder quaderförmig ausgebildet sein. Der Magnet kann rotationssymmetrisch und/oder zylinderförmig ausgebildet sein. Der Magnettopf kann als einseitig offener Hohlzylinder ausgebildet sein und/oder eine Öffnung aufweisen. Der Magnettopf kann eine Form im Querschnitt (senkrecht zu einer Richtung der Magnetkraft bzw. senkrecht zur Kopplungsfläche im gekoppelten Zustand) entsprechend der Querschnittsform des Magneten aufweisen. Der Magnet kann in den Magnettopf eingesetzt sein. Der Magnettopf kann ferromagnetisch sein und/oder kann aus einem ferromagnetischen Material bestehen. Der Magnet kann am Magnettopf, insbesondere an einem Boden des Magnettopfes, befestigt sein. Der Magnet kann in den Magnettopf eingeklebt sein. Alternativ kann der Magnet am Magnettopf allein mittels Magnetkraft befestigt sein. In diesem Fall kann die Magnetkraft zur Befestigung des Magneten im Magnettopf größer sein als die Magnetkraft zum Koppeln der Magneteinheit an der ferromagnetischen Einheit. Die Tiefe des Magnettopfes kann gleich oder größer als die Höhe des Magneten sein. Eine Stirnseite des Magneten kann bündig mit einer Stirnseite des Magnettopfes sein.

Die Magneteinheit kann ein Positionierelement umfassen. Eine Form des Kopplungsbereichs und eine Form des Positionierelements können so aneinander angepasst sein und/oder die Größe der Magnetkraft kann so gewählt sein, dass die Magneteinheit mittels der Magnetkraft in einer vorgegebenen Orientierung, insbesondere ohne äußere Krafteinwirkung, an der ferromagnetischen Einheit gekoppelt ist. Eine Form des Kopplungsbereichs und eine Form des Positionierelements können so aneinander angepasst sein und/oder die Größe der Magnetkraft kann so gewählt sein, dass sich die ferromagnetische Einheit beim Annähern der Magneteinheit an die Kopplungsfläche selbstständig orientiert bzw. zentriert bzw. in die vorgegebene Orientierung positioniert (sogenannte Auto-Orientierung bzw. Auto-Zentrierung bzw. Auto-Positionierung). Dies ermöglicht, die Haltevorrichtung bzw. die Magneteinheit ohne Aufwand stets in der vorgegebenen Orientierung zu positionieren.

Der Kopplungsbereich und das Positionierelement können ineinander eingesetzt sein und/oder können ineinander eingreifen. Das Positionierelement kann am Magnettopf ausgebildet sein, insbesondere an einem Rand des Magnettopfs. Das Positionierelement kann an einer Stirnseite der Magneteinheit, insbesondere an einer Stirnseite des Magnettopfs (bzw. des Randes des Magnettopfs), und/oder an einer Außenseite der Magneteinheit, insbesondere an einer Außenseite des Magnettopfs (bzw. des Randes des Magnettopfs), ausgebildet sein. Das Positionierelement kann einteilig mit der Magneteinheit bzw. dem Magnettopf bzw. dem Rand ausgebildet sein. Der Rand des Magnettopfs kann die Öffnung des Magnettopfs umgeben. Der Rand des Magnettopfes kann die Stirnseite des Magnettopfes umfassen. Die Stirnseite kann einen Teil des Randes bilden.

Der Kopplungsbereich kann eine Kopplungsfläche umfassen. Die Kopplungsfläche kann der Magneteinheit, insbesondere dem Magnettopf und/oder dem Magneten, gegenüberliegen. Die Kopplungsfläche kann plan sein.

Die Kopplungsfläche und die Stirnseite des Magnettopfes und/oder die Stirnseite des Magneten können sich im gekoppelten Zustand berühren. Die Kopplungsfläche kann ferromagnetisches Material zur magnetischen Kopplung mit der Magneteinheit umfassen oder daraus bestehen. Die Magnetkraft zum Koppeln der Haltevorrichtung und des Adapters kann zwischen der ferromagnetischen Einheit und der Magneteinheit, insbesondere zwischen dem Kopplungsbereich (bzw. der Kopplungsfläche des Kopplungsbereichs) und dem Magneten und/oder dem Magnettopf, wirken. Die Magnetkraft kann senkrecht zur Kopplungsfläche verlaufen.

"In einer vorgegebenen Orientierung gekoppelt" kann bedeuten, dass ein Verdrehen der Magneteinheit um eine Drehachse senkrecht zur Kopplungsfläche des Kopplungsbereichs bis zur vorgegebenen äußeren Krafteinwirkung, insbesondere ohne Lösen der magnetischen Kopplung des Adapters und der Haltevorrichtung, verhindert ist oder wird. Die vorgegebene äußere Krafteinwirkung kann hier eine äußere Krafteinwirkung in einer vorgegebenen ersten Richtung mit einem vorgegebenen Wert angeben. Das Verdrehen der Magneteinheit kann auch um eine Drehachse parallel zur Magnetkraft und/oder koaxial mit der Achse des Magnettopfs und/oder des Magnets definiert sein. Bei einer äußeren Krafteinwirkung in der vorgegebenen ersten Richtung und ab oder über dem vorgegebenen Wert kann ein Verdrehen der Magneteinheit um die Drehachse senkrecht zur Kopplungsfläche ermöglicht sein und/oder kann die magnetische Kopplung gelöst werden.

Ein Verkippen der Magneteinheit um eine Achse parallel zur Kopplungsfläche des Kopplungsbereichs kann bei einer vorgegebenen äußeren Krafteinwirkung ermöglicht sein. Die vorgegebene äußere Krafteinwirkung kann hier eine äußere Krafteinwirkung in einer vorgegebenen zweiten Richtung mit einem vorgegebenen Wert (Betrag) größer null sein. Das Verkippen der Magneteinheit kann um eine Achse senkrecht zur Magnetkraft bzw. zur Mittelachse oder Symmetrieachse des Magnettopfs und/oder des Magnets definiert sein. Die vorgegebene äußere Krafteinwirkung kann allgemein eine äußere Krafteinwirkung auf die Magneteinheit sein.

Der Kopplungsbereich kann als Vertiefung in der ferromagnetischen Einheit ausgebildet sein. Die Vertiefung kann auch als Innennut bezeichnet werden. Die Vertiefung kann die Kopplungsfläche umfassen. Die Vertiefung kann eine die Kopplungsfläche begrenzende Kante umfassen. Der Rand des Magnettopfes kann in die Vertiefung eingesetzt sein, insbesondere wenn der Adapter und die Haltevorrichtung aneinandergekoppelt sind. Die Vertiefung und/oder der Rand des Magnettopfes können nicht-rotationssymmetrisch geformt sein. Die Vertiefung und/oder der Rand des Magnettopfes kann einen nicht-rotationssymmetrisch geformten Umfang haben. Die Vertiefung und/oder der Rand des Magnettopfes kann einen kreisförmigen Umfang mit Ausnahme von zumindest einem abweichend geformten Umfangsabschnitt ausgebildet sein. Der abweichend geformte Umfangsbereich kann geradlinig sein und/oder kann die Form einer Kreissehne aufweisen. Ein Bereich des Randes des Magnettopfes, der von der Rotationssymmetrie abweicht, bzw. der abweichend geformte Umfangsbereich des Randes des Magnettopfes kann als das Positionierelement betrachtet werden.

Das Positionierelement kann als Positioniernase ausgebildet sein. Die Positioniernase kann als vorstehendes bzw. erhabenes Element ausgebildet sein. Die Positioniernase kann von einer Stirnseite und/oder Außenseite der Magneteinheit (insbesondere des Magnettopfes) vorstehen. Der Kopplungsbereich, insbesondere die Kopplungsfläche, kann eine entsprechend geformte Aussparung aufweisen, in die die Positioniernase (im gekoppelten Zustand) eingesetzt ist. Die Positioniernase kann prismenförmig sein. Die Positioniernase kann sich mit zunehmender Entfernung von der Magneteinheit bzw. dem Magnettopf verjüngen. Die Basis des Prismas kann auf der Stirnseite der Magneteinheit bzw. des Magnettopfes angeordnet sein. Die Positioniernase kann sich von der Basis mit zunehmender Entfernung von der Stirnseite verjüngen.

Die Positioniernase kann zwei einander gegenüberliegende Seitenflächen aufweisen. Die zwei Seitenflächen können jeweils einen Winkel kleiner 90° oder kleiner 75°, vorzugsweise ungefähr 45°, mit einer Ebene senkrecht zur Symmetrieachse des Magnettopfs bilden und/oder die Seitenflächen können Auflageflächen zur Auflage in der Aussparung des Kopplungsbereichs bilden. Die zwei Seitenflächen können mit zunehmender Entfernung von der Magneteinheit bzw. dem Magnettopf aufeinander zulaufen. Die Positioniernase kann einen trapezförmigen Querschnitt aufweisen. Eine Flächennormale jeder der Seitenfläche kann senkrecht zur Radialrichtung des Magnettopfes und/oder des Magnets verlaufen. Die Flächennormalen beider Seitenflächen können in einer Ebene angeordnet sein.

Die Aussparung des Kopplungsbereich kann korrespondierend zu der Positioniernase geformt sein. Die Aussparung des Kopplungsbereichs kann prismenförmig ausgebildet sein. Seitenflächen der Aussparung können Kontaktflächen bzw. Reibflächen zum Abscheren der Magneteinheit vom Kopplungsbereich bilden. Die Auflage der Positioniernase in der Aussparung des Kopplungsbereichs (bzw. die Auflage der zwei Seitenflächen der Positioniernase auf den Kontaktflächen) können insgesamt als ein Auflagepunkt betrachtet werden.

Die Aussparung des Kopplungsbereichs kann zu einer Seite, die einer Außenseite des Magnettopfs entspricht, offen sein. Die Aussparung des Kopplungsbereichs und die Positioniernase können jeweils an einer Position ausgebildet sein, die in Schwerkraftrichtung am weitesten unten liegt, wenn der Adapter am Laserbearbeitungskopf befestigt ist und die Haltevorrichtung und der Adapter aneinander gekoppelt sind und/oder die beim Betrieb des Laserbearbeitungskopfes dem Werkstück am nächsten liegt. Die Position der Aussparung kann an einem unteren Bereich des Rands des Kopplungsbereichs angeordnet sein.

Gemäß alternativer Ausführungsformen kann das Positionierelement bzw. die Positioniernase am Kopplungsbereich und die Aussparung an der magnetischen Einheit ausgebildet sein. Das oben gesagte gilt entsprechend soweit anwendbar.

Die Magneteinheit kann an drei Auflagepunkten mit der ferromagnetischen Einheit in Kontakt stehen. "In Kontakt stehen" ist in der vorliegenden Offenbarung als synonym zu "berühren" zu verstehen. Das Positionierelement bzw. die beiden Auflageflächen des Positionierelements können einen Auflagepunkt bilden. Die Magneteinheit kann zwei weitere Auflageelemente aufweisen, die jeweils einen Auflagepunkt bilden. Die Auflageelemente können auf der Stirnseite der Magneteinheit (insbesondere des Magnettopfes) angeordnet sein und/oder können von der Stirnseite hervorstehen. Die Auflageelemente können im gekoppelten Zustand der Magneteinheit und der ferromagnetischen Einheit auf der Kopplungsfläche aufliegen. Alternativ können die Auflageelemente auch auf der Kopplungsfläche ausgebildet sein. Eine solche Drei-Punkt-Auflage kann eine kippstabile Auflage der Magneteinheit auf der Kopplungsfläche bereitstellen.

Die Haltevorrichtung kann ferner eine Klemmvorrichtung umfassen, durch die die Schutzgasdüse an der Haltevorrichtung austauschbar befestigt ist. Die Klemmvorrichtung kann für unterschiedliche Durchmesser der Schutzgasdüse einstellbar sein. Dadurch kann die Düseneinheit abhängig von der Anwendung für Schutzgasdüsen unterschiedlicher Durchmesser einstellbar sein.

Die Schutzgasdüse kann als Rohr ausgebildet sein oder ein Rohr umfassen. Das Rohr kann einen im Wesentlichen zylinderförmigen Abschnitt aufweisen und/oder kann ein spitz zulaufendes Ende aufweisen. Das spitz zulaufende Ende kann zwei flach abgeschnittene Seiten aufweisen. Die Schutzgasdüse bzw. das Rohr kann aus Metall, insbesondere Kupfer, bestehen oder dieses umfassen.

Die Klemmvorrichtung kann ein erstes Klemmelement mit einer ersten, insbesondere V-förmigen, Einkerbung und ein zweites Klemmelement mit einer zweiten, insbesondere V-förmigen, Einkerbung aufweisen. Die erste Einkerbung und die zweite Einkerbung können entlang einer vorgegebenen Richtung gegenüberliegen. Die zwei Klemmelemente können entlang der vorgegebenen Richtung relativ zueinander verschiebbar sein, um die Schutzgasdüse zwischen den Klemmelementen einzuklemmen. Durch die Klemmvorrichtung können Schutzgasdüsen mit verschiedenen Durchmessern verwendet werden. Die Schutzgasdüse kann zwischen den V-förmigen Einkerbungen eingeklemmt werden.

Das erste Klemmelement kann mit der Magneteinheit, insbesondere mit dem Magnettopf, verbunden sein. Die erste und/oder zweite Einkerbung kann zunächst parallel und dann V-förmig sein.

Die Haltevorrichtung kann ferner eine Verstellvorrichtung aufweisen. Mittels der Verstellvorrichtung kann die Position der Schutzgasdüse relativ zum Adapter und/oder relativ zum Gehäuse des Laserbearbeitungskopfes und/oder relativ zur Strahlausbreitungsrichtung des Laserstrahls und/oder relativ zur Magneteinheit verstellt werden. Die Verstellvorrichtung kann als Platte mit einem Langloch ausgebildet sein. Somit kann die Verstellvorrichtung bzw. die Position der Schutzgasdüse in Richtung des Langlochs verstellt werden. Mittels einer Klemmschraube der Haltevorrichtung kann die Verstellvorrichtung lösbar an der Magneteinheit befestigt werden. Die Verstellvorrichtung kann wiederum fest mit der Klemmvorrichtung bzw. der Schutzgasdüse verbunden sein.

Der Laserbearbeitungskopf kann eingerichtet sein, um den Laserstrahl in eine Bearbeitungszone am Werkstück einzustrahlen. Der Laserbearbeitungskopf kann zumindest ein optisches Element zum Strahlführen und/oder zum Strahlformen aufweisen. Insbesondere kann der Laserbearbeitungskopf eine Fokussieroptik zum Fokussieren des Laserstrahls auf das Werkstück umfassen. Außerdem kann der Laserbearbeitungskopf eine Kollimieroptik zum Kollimieren des Laserstrahls umfassen. Der Laserbearbeitungskopf kann ein Gehäuse umfassen. Die Fokussieroptik und die Kollimieroptik können innerhalb des Gehäuses angeordnet sein. Das Gehäuse des Laserbearbeitungskopfs kann einen optischen Raum des Laserbearbeitungskopf definieren.

Der Laserbearbeitungskopf kann als Laserschweißkopf ausgebildet sein. Der Laserbearbeitungskopf kann zum Laserbearbeiten, insbesondere zum Laserschweißen, vorzugsweise zum Laserauftragschweißen, des Werkstücks, geeignet und/oder ausgebildet sein.

Ferner kann der Laserbearbeitungskopf eine Drahtführungsvorrichtung zum Zuführen eines Schweißdrahtes in die Bearbeitungszone am Werkstück umfassen. Das Zuführen des Schweißdrahtes kann zumindest streckenweise konzentrisch zum Laserstrahl erfolgen. Dies kann bedeuten, dass eine Drahtführungsrichtung des Schweißdrahtes und eine Strahlausbreitungsrichtung des Laserstrahls zumindest streckenweise koaxial zueinander verlaufen. Außerdem kann der Laserbearbeitungskopf zumindest ein weiteres optisches Element, beispielsweise ein Axicon und/oder ein Prisma, zum Bilden eines ringförmigen Laserstrahls und/oder zum konzentrischen Einstrahlen des Laserstrahls mit dem Schweißdraht in die Bearbeitungszone am Werkstück umfassen.

Das Werkstück kann ein metallisches Werkstück sein. Das Auftragsmaterial und/oder das Material des Schweißdrahtes kann ein metallisches Material umfassen oder daraus bestehen.

Der zumindest eine Magnet kann die Magnetkraft auch bei einer Temperatur von mehr als 100° C, beispielsweise bei 200° C, behalten. Der zumindest eine Magnet kann AlNiCo, Neodym, Samarium und/oder Kobalt umfassen oder aus einer Samarium-Kobalt-Legierung bestehen oder diese umfassen. Dadurch kann sichergestellt werden, dass der Magnet seine Magnetkraft auch bei hohen Temperaturen, wie sie beim Laserauftragsschweißen in der Bearbeitungszone am Werkstück entstehen, behält.

### Kurzbeschreibung der Figuren

Ausführungsformen der vorliegenden Offenbarung sind anhand der Figuren veranschaulicht und sind nachfolgend im Detail beschrieben. Es zeigen:
- Fig. 1: eine schematische Ansicht eines Laserbearbeitungskopfes mit einer Düseneinheit gemäß Ausführungsformen der vorliegenden Offenbarung;
- Fig. 2A: eine schematische Querschnittsansicht einer Düseneinheit gemäß Ausführungsformen der vorliegenden Offenbarung;
- Fig. 2B: eine schematische perspektivische Ansicht einer Düseneinheit gemäß Ausführungsformen der vorliegenden Offenbarung;
- Fig. 3A: eine schematische Draufsicht auf die Düseneinheit gemäß Ausführungsformen der vorliegenden Offenbarung, bei der eine Schutzgasdüse entfernt ist;
- Fig. 3B: eine schematische Draufsicht auf die Düseneinheit gemäß Ausführungsformen der vorliegenden Offenbarung, bei der eine Schutzgasdüse entfernt ist;
- Fig. 4A: eine schematische perspektivische Ansicht eines Adapters einer Düseneinheit gemäß einer ersten Ausführungsform der vorliegenden Offenbarung;
- Fig. 4B: eine schematische perspektivische Ansicht einer Magneteinheit einer Düseneinheit gemäß einer ersten Ausführungsform der vorliegenden Offenbarung;
- Fig. 5A: eine schematische perspektivische Ansicht eines Adapters einer Düseneinheit gemäß einer zweiten Ausführungsform der vorliegenden Offenbarung;
- Fig. 5B: eine schematische perspektivische Ansicht einer Magneteinheit der Düseneinheit gemäß der zweiten Ausführungsform der vorliegenden Offenbarung;
- Fig. 5C: eine schematische Draufsicht von unten des Adapters der Düseneinheit gemäß der zweiten Ausführungsform der vorliegenden Offenbarung;
- Fig. 5D: eine schematische Draufsicht von unten der Magneteinheit der Düseneinheit gemäß der zweiten Ausführungsform der vorliegenden Offenbarung;
- Fig. 6: eine schematische perspektivische Ansicht eines Endes einer Schutzgasdüse gemäß Ausführungsformen der vorliegenden Offenbarung.

### Detaillierte Beschreibung

Im Folgenden werden, sofern nicht anders angegeben, für gleiche und gleichwirkende Elemente dieselben Bezugszeichen verwendet. Die in den Figuren gezeigten Richtungen x, y und z sind Koordinatenachsen eines kartesischen Koordinatensystems.

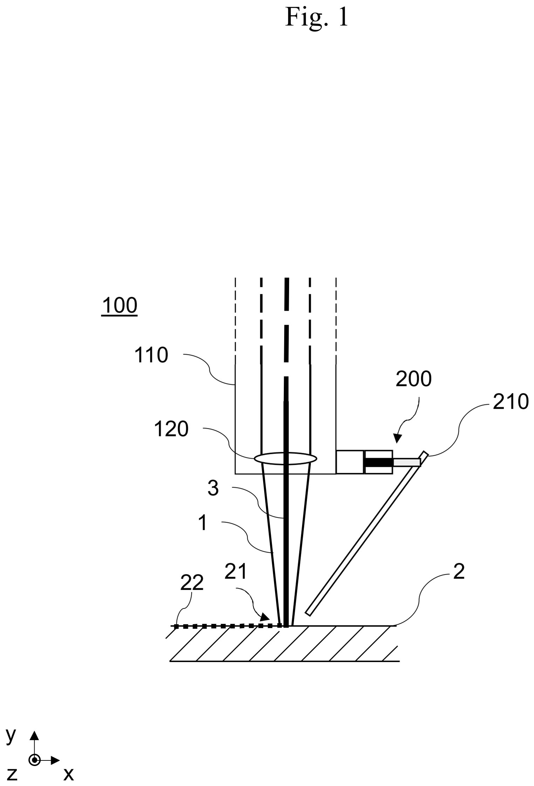

Fig. 1 zeigt eine schematische Ansicht eines Laserbearbeitungskopfes mit einer Düseneinheit gemäß Ausführungsformen der vorliegenden Offenbarung.

Der Laserbearbeitungskopf 100 dient insbesondere zum Auftragsschweißen mittels Laserstrahl 1 (Laserauftragsschweißen), und kann daher auch als Laserschweißkopf bezeichnet werden. Beim Laserauftragsschweißen wird das Auftragsmaterial in eine Bearbeitungszone 21 an einem Werkstück 2 als Draht 3 geführt. Gleichzeitig wird der Laserstrahl 1 in die Bearbeitungszone 21 eingestrahlt. Dadurch schmilzt der zugeführte Draht 3 und verbindet sich mit dem Werkstück 2. Durch Fortbewegen der Bearbeitungszone 21, beispielsweise durch Bewegen des Laserbearbeitungskopfes 100 entlang einer Vorschubrichtung, beispielsweise entlang der x-Richtung, entsteht eine Schweißnaht 22. Die Schweißnaht 22 kann zum Verbinden von mehreren Werkstücken dienen. Zusätzlich oder alternativ können Strukturen auf dem Werkstück 2 ausgebildet werden.

Wie gezeigt, verläuft eine Strahlausbreitungsrichtung bzw. eine Strahlachse des Laserstrahls 1 parallel zur y-Richtung. Die Drahtführung erfolgt entlang einer Drahtführungsrichtung, die koaxial zur Strahlausbreitungsrichtung verläuft. Der Laserbearbeitungskopf 100 umfasst optische Elemente zur Strahlführung und -formung, beispielsweise Linsen, Objektive, Spiegel, Prismen, Axicons, etc.. Gezeigt ist eine Fokussierlinse 120 zum Fokussieren des Laserstrahls 1 auf das Werkstück 2. Der Laserbearbeitungskopf 100 kann außerdem eine Kollimierlinse (nicht gezeigt) zum Kollimieren des Laserstrahls 1 umfassen. Der Laserbearbeitungskopf 100 kann weitere, nicht gezeigte optische Elemente umfassen. Zu diesen weiteren optischen Elementen können ein oder mehrere Axicons zum ringförmigen Ausbilden des Laserstrahls 1 zählen. Außerdem kann der Laserbearbeitungskopf 100 ein oder mehrere Prismen zum Aufteilen des Laserstrahls 1 in mehrere Teile und ein oder mehrere Spiegel zum Herumführen des Laserstrahls 1 um den Draht 3 umfassen. "Ringförmig" kann auch bedeuten, dass der Laserstrahl 1 eine drehsymmetrische, insbesondere eine rotationssymmetrische, Form bezüglich der Strahlausbreitungsrichtung hat.

Zudem kann eine Laserquelle (nicht gezeigt) zum Erzeugen des Laserstrahls 1 vorgesehen sein. Der Laserstrahl kann durch eine Lichtleitfaser (ebenfalls nicht gezeigt) dem Laserbearbeitungskopf 100 zugeführt werden. Ferner kann eine Verfahrvorrichtung (nicht gezeigt) vorgesehen sein, die zum Einstellen einer Position des Laserbearbeitungskopfes 100 relativ zum Werkstück 2, insbesondere Bewegen des Laserbearbeitungskopfes 100 entlang der Vorschubrichtung, eingerichtet ist. Das Werkstück 2 oder die Werkstücke können als plattenförmiges und/oder metallisches Werkstück ausgebildet sein.

Der Laserbearbeitungskopf 100 umfasst ein Gehäuse 110, in dem die optischen Elemente untergebracht sind. Ferner umfasst der Laserbearbeitungskopf 100 eine Düseneinheit 200 zur lateralen Schutzgaszufuhr gemäß Ausführungsformen der vorliegenden Offenbarung. Die Düseneinheit 200 umfasst eine Schutzgasdüse 210. Die Düseneinheit 200 ist am Gehäuse 110, insbesondere an der Außenseite des Gehäuses 110, befestigt. Die Düseneinheit 200 kann insbesondere an einem Flansch oder Auskragung (nicht gezeigt) des Gehäuses 110 befestigt sein. Die Befestigung kann lösbar sein. Die Düseneinheit 200 kann wie gezeigt an einem unteren Ende, d. h. einem Ende des Gehäuses 110, das dem Werkstück 2 gegenüberliegt, angeordnet sein.

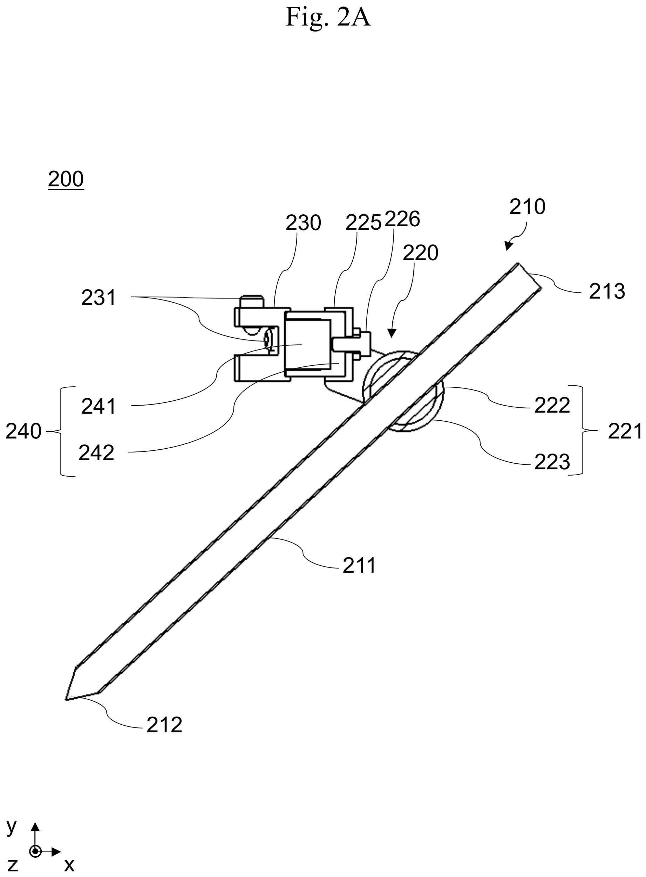

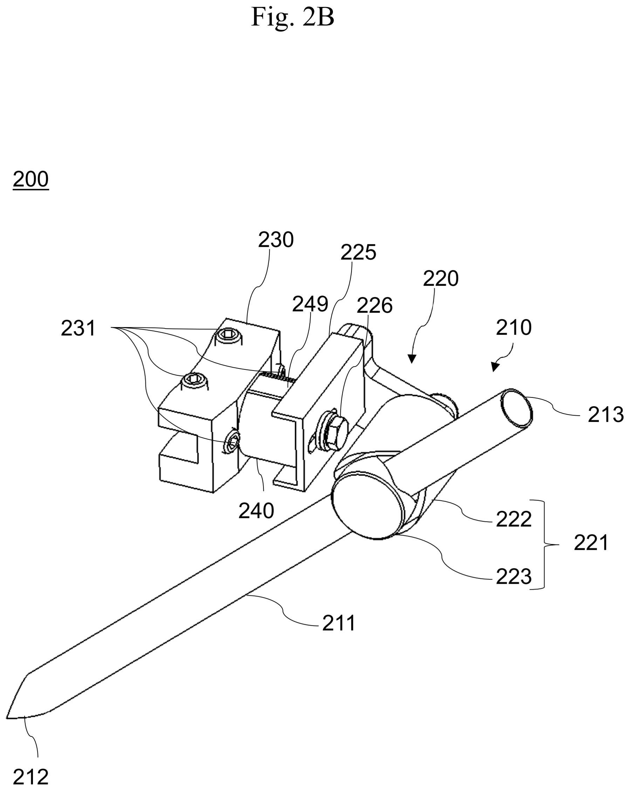

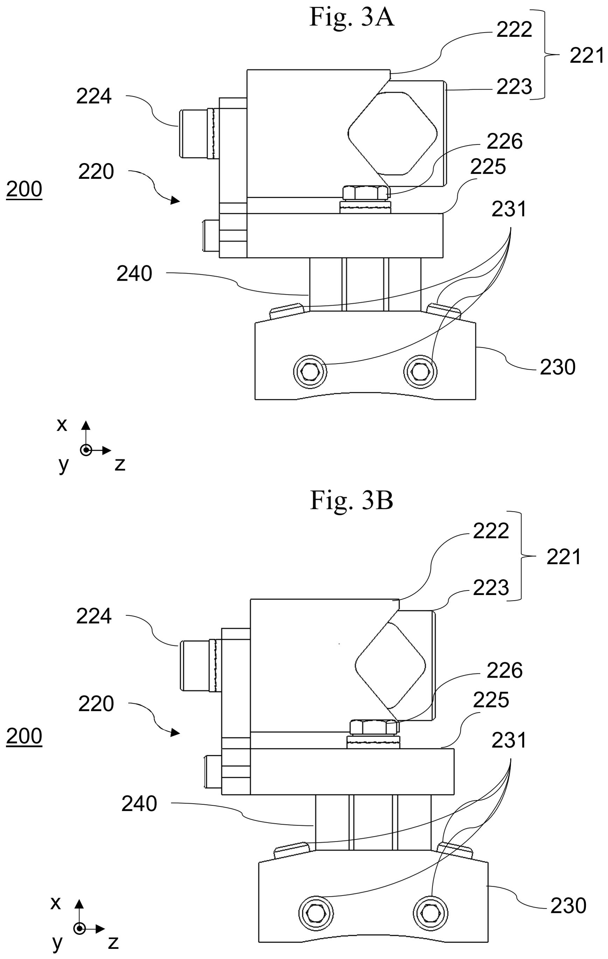

Fig. 2A zeigt eine schematische Querschnittsansicht in der x-y-Ebene einer Düseneinheit gemäß Ausführungsformen der vorliegenden Offenbarung. Fig. 2B zeigt eine schematische perspektivische Ansicht der Düseneinheit. Fig. 3A und Fig. 3B zeigen jeweils eine Draufsicht auf die Düseneinheit, bei der die Schutzgasdüse entfernt ist.

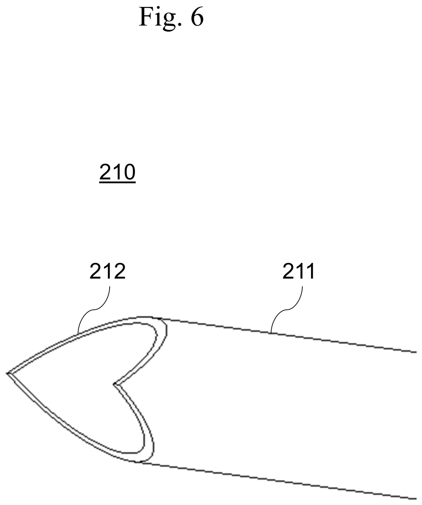

Die Düseneinheit 200 umfasst die Schutzgasdüse 210. Die Schutzgasdüse 210 ist als Rohr ausgebildet. Das Rohr umfasst einen im Wesentlichen zylinderförmigen Abschnitt 211 mit einem ersten Ende 213 und einem spitz zulaufenden zweiten Ende 212. Das Schutzgas (nicht gezeigt) tritt aus dem zweiten Ende 212 aus und wird am ersten Ende 213 des zylinderförmigen Abschnitts 211 der Schutzgasdüse 210 zugeführt. Das Rohr 210 kann beispielsweise aus Kupfer bestehen. Fig. 6 zeigt eine schematische perspektivische Ansicht des zweiten Endes 212 des zylinderförmigen Abschnitts 211 der Schutzgasdüse 210 gemäß Ausführungsformen der vorliegenden Offenbarung. Wie gezeigt, ist der zylinderförmige Abschnitt 211 an zwei Seiten, die sich vorzugsweise bezüglich der Mittelachse des Abschnitts 211 gegenüberliegen, in einem Winkel flach abgeschnitten, um das spitz zulaufende zweite Ende 212 zu bilden. Das zweite Ende 212 kann also symmetrisch, insbesondere drehsymmetrisch, sein.

Ferner umfasst die Düseneinheit 200 eine Haltevorrichtung 220 zum Halten der Schutzgasdüse 210. Die Schutzgasdüse 210 ist wie gezeigt über den zylinderförmigen Abschnitt 211 an der Haltevorrichtung 220 befestigt, beispielsweise durch Klemmen.

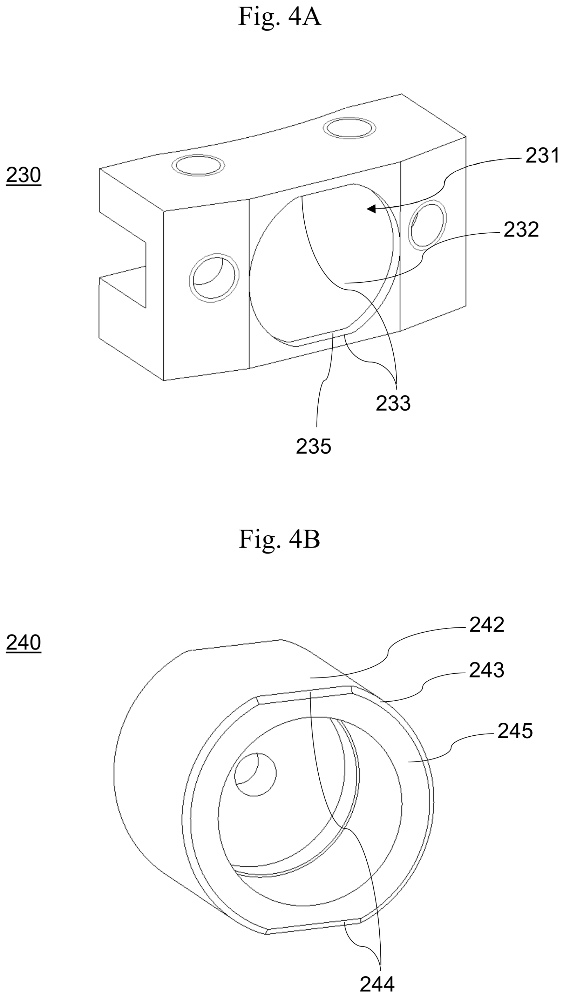

Darüber hinaus umfasst die Düseneinheit 200 einen Adapter 230 zur Befestigung der Düseneinheit 200 bzw. der Haltevorrichtung 220 am Laserbearbeitungskopf 100. Die Haltevorrichtung 220 und der Adapter 230 sind mittels Magnetkraft lösbar aneinandergekoppelt. Die Haltevorrichtung 220 umfasst dazu eine Magneteinheit 240 und der Adapter 230 umfasst eine ferromagnetische Einheit. Auch wenn im Folgenden mit Bezug auf die Figuren beschrieben ist, dass die Haltevorrichtung die Magneteinheit und der Adapter die ferromagnetische Einheit umfasst, ist die vorliegende Erfindung nicht hierauf beschränkt. Es kann auch die Haltevorrichtung die ferromagnetische Einheit und der Adapter die Magneteinheit umfassen. Die magnetische Kopplung, die Magneteinheit 240 und die ferromagnetische Einheit werden später mit Bezug auf Fig. 4A bis 5D im Detail beschrieben.

Die Größe der Magnetkraft ist so gewählt, dass die magnetische Kopplung des Adapters 230 und der Haltevorrichtung 220 ab einer vorgegebenen äußeren Krafteinwirkung auf die Haltevorrichtung 220 bzw. die Schutzgasdüse 210 gelöst wird. Die äußere Krafteinwirkung kann von einer Kollision der Schutzgasdüse 210 mit einem weiteren Gegenstand, insbesondere dem Werkstück, herrühren. Die Größe der Magnetkraft ist so gewählt, dass die Schwerkraft, die auf die Haltevorrichtung 220 und die Schutzgasdüse 210 wirkt, nicht zum Lösen der magnetischen Kopplung führt. Dadurch kann sichergestellt werden, dass sich die Haltevorrichtung 220 bei einer Kollision der Düseneinheit 200 bzw. der Schutzgasdüse 210 vom Adapter 230 lösen kann.

Der Adapter 230 kann lösbar am Gehäuse 110 des Laserbearbeitungskopfes 100 befestigt werden. Dazu kann der Adapter 230, wie gezeigt, als C-Klemme oder Schraubklemme ausgebildet sein, in die der Flansch bzw. die Auskragung des Gehäuses 110 eingesetzt ist. Zur lösbaren Befestigung des Adapters 230 bzw. der Düseneinheit 200 als Ganzes am Gehäuse 110 umfasst der Adapter 230 eine oder mehrere Schrauben oder Bolzen 231.

Die Haltevorrichtung 220 umfasst ferner eine Klemmvorrichtung 221, mittels der die Schutzgasdüse 210 lösbar bzw. austauschbar an der Haltevorrichtung 220 befestigt werden kann. Die Klemmvorrichtung 221 ist für unterschiedliche Durchmesser der Schutzgasdüse 210, insbesondere dem zylindrischen Abschnitt 211 der Schutzgasdüse 210, einstellbar. Dadurch kann die Düseneinheit 200, abhängig von der Anwendung, für Schutzgasdüsen unterschiedlicher Durchmesser einstellbar sein und verwendet werden. Fig. 3A zeigt eine Einstellung der Klemmvorrichtung 221 für eine Schutzgasdüse 210 mit einem relativ größeren Durchmesser, Fig. 3B zeigt eine Einstellung der Klemmvorrichtung 221 für eine Schutzgasdüse 210 mit einem relativ kleineren Durchmesser.

Die Klemmvorrichtung 221 umfasst ein erstes Klemmelement 222 und ein zweites Klemmelement 223. Jedes der Klemmelemente 222, 223 umfasst an seinem Ende eine Einkerbung, die V-förmig ausgebildet ist, jedenfalls aber einen V-förmigen Abschnitt umfasst. Die Enden der Klemmelemente 222, 223 mit den Einkerbungen liegen sich entlang einer vorgegebenen Richtung gegenüber. In Fig. 3A und 3B verläuft diese Richtung entlang der z-Achse. Die zwei Klemmelemente 222, 223 können entlang der vorgegebenen Richtung zueinander verschiebbar oder verstellbar sein. Beispielsweise kann das zweite Klemmelement 223 relativ zum ersten Klemmelement 222 verstellbar sein bzw. verstellt werden. Zu diesem Zweck kann die Haltevorrichtung 220 eine Schraube 224 aufweisen. Durch Verstellen kann die Schutzgasdüse 210 zwischen den Klemmelementen 222, 223 eingeklemmt werden.

Die Haltevorrichtung 220 umfasst ferner eine Verstellvorrichtung 225. Mittels der Verstellvorrichtung 225 kann die Position der Schutzgasdüse 210 relativ zum Adapter 230 und/oder relativ zur Magneteinheit 240 verstellt werden. Dadurch kann die Position der Schutzgasdüse relativ zum Gehäuse des Laserbearbeitungskopfes und/oder relativ zur Strahlausbreitungsrichtung des Laserstrahls eingestellt werden, um sicherzustellen, dass das Schutzgas präzise in die Bearbeitungszone zugeführt wird. Wie gezeigt, ist die Verstellvorrichtung 225 als Platte mit einem Langloch ausgebildet. Somit kann die Verstellvorrichtung 225 bzw. die Position der Schutzgasdüse 210 in Richtung des Langlochs verstellt werden. Mittels einer Klemmschraube 226 der Haltevorrichtung 220 kann die Verstellvorrichtung 225 lösbar an der Magneteinheit 240 befestigt werden. Die Verstellvorrichtung 225 ist wiederum fest mit der Klemmvorrichtung 221 bzw. der Schutzgasdüse 210 verbunden. Die Magneteinheit 245 kann an der Außenseite einen geraden Abschnitt 249 zum Führen der Verstellvorrichtung 224 aufweisen.

Fig. 4A zeigt eine schematische perspektivische Ansicht des Adapters der Düseneinheit gemäß einer ersten Ausführungsform der vorliegenden Offenbarung. Fig. 4B zeigt eine schematische perspektivische Ansicht der Magneteinheit der Düseneinheit gemäß der ersten Ausführungsform der vorliegenden Offenbarung.

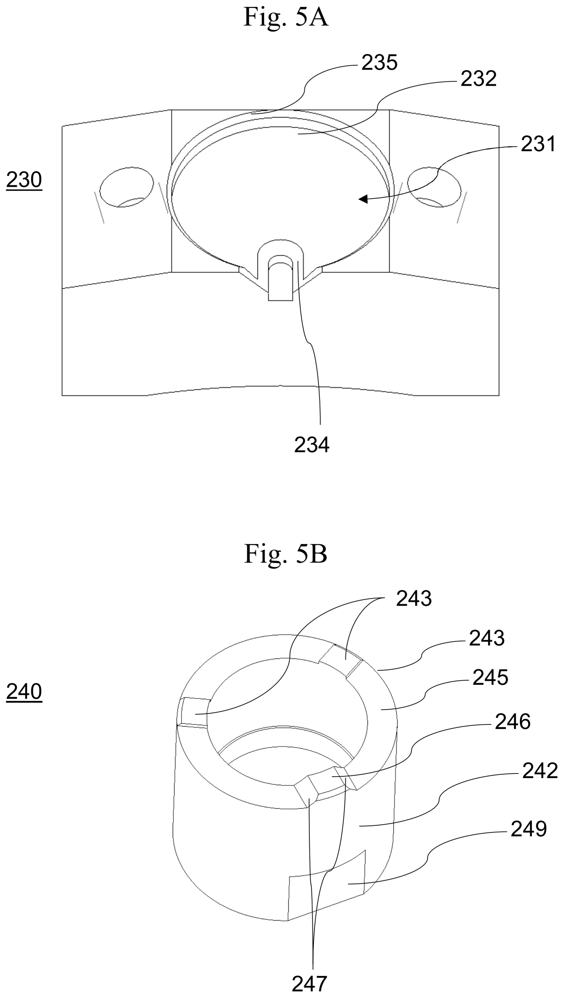

In dem gezeigten Ausführungsbeispiel umfasst der Adapter 230 eine ferromagnetische Einheit bzw. ist als ferromagnetische Einheit ausgebildet. Dies bedeutet, dass der Adapter 230, jedenfalls aber ein Kopplungsbereich 231 des Adapters 230, aus ferromagnetischem Material besteht oder dieses umfasst. In dem gezeigten Ausführungsbeispiel umfasst ferner die Haltevorrichtung 220 eine Magneteinheit 240 mit einem Magneten 241 (Fig. 2A) und einem Magnettopf 242. Fig. 4B und 5B zeigen die Magneteinheit 240 ohne Magneten 241 aus Gründen der Übersichtlichkeit. Durch die Magneteinheit 240 und die ferromagnetische Einheit kann die Magnetkraft zum magnetischen Koppeln des Adapters 230 und der Haltevorrichtung 220 bereitgestellt werden.

Der Magnet 241 ist im Wesentlichen zylinderförmig ausgebildet und in den Magnettopf 242 eingesetzt. Beispielsweise kann der Magnet 241 in den Magnettopf 242 eingeklebt sein. Der Magnettopf 242 kann ebenfalls aus einem ferromagnetischen Material bestehen. Fig. 2A zeigt, dass die Tiefe des Magnettopfes 242 gleich der Höhe des Magneten 241 ist. Die vorliegende Offenbarung ist hierauf aber nicht beschränkt. Die Tiefe des Magnettopfes 242 kann auch größer sein als die Höhe des Magneten 241.

Der Kopplungsbereich 231 ist als Vertiefung in der ferromagnetischen Einheit ausgebildet. Der Kopplungsbereich 231 bzw. die Vertiefung umfasst eine Kopplungsfläche 232 und einen Rand 235. Die Kopplungsfläche 232 liegt der Magneteinheit 240 gegenüber und ist plan. Der Rand 243 des Magnettopfes 242 ist in die Vertiefung eingesetzt und die Kopplungsfläche 232 und eine Stirnseite 245 des Magnettopfes 240 berühren sich, wenn der Adapter 230 und die Haltevorrichtung 220 aneinandergekoppelt sind. Die Vertiefung bzw. der Rand 235 der Vertiefung und der Rand 243 des Magnettopfes 242 sind nicht-rotationssymmetrisch geformt. Wie gezeigt, haben die Vertiefung bzw. der Rand 235 der Vertiefung und der Rand 243 des Magnettopfes 242 einen kreisförmigen Umfang mit Ausnahme von zumindest einem abweichend geformten Umfangsabschnitt 233 bzw. 244. Der abweichend geformte Umfangsbereich 233, 244 kann beispielsweise geradlinig sein. Wie gezeigt, weisen sowohl die Vertiefung bzw. der Rand 235 der Vertiefung als auch der Rand 243 des Magnettopfes 242 zwei abweichend geformte Umfangsabschnitte 233 bzw. 244 auf. Beim Rand 243 bilden die abweichend geformten Umfangsbereiche 244 jeweils ein Positionierelement.

Die Form des Kopplungsbereichs 231 und die Form der Positionierelemente sind so aneinander angepasst, dass die Magneteinheit 240 mittels der Magnetkraft in einer vorgegebenen Orientierung, insbesondere ohne äußere Krafteinwirkung, am Adapter 230 gekoppelt ist.

Bei dieser Ausführungsform ist ein Verkippen der Magneteinheit 240 um eine Achse parallel zur Kopplungsfläche 232 (in Fig. 3A, 3B parallel zur y-z-Ebene) bei einer äußeren Krafteinwirkung auf die Magneteinheit 240, die beispielsweise von einer Kollision der Schutzgasdüse 210 mit einem Gegenstand herrührt, möglich.

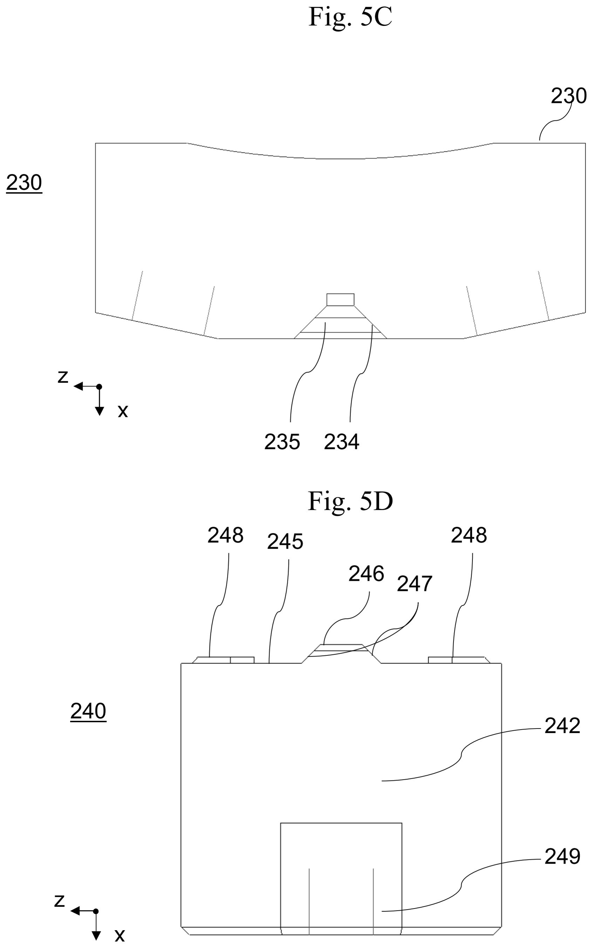

Fig. 5A zeigt eine schematische perspektivische Ansicht des Adapters der Düseneinheit gemäß einer zweiten Ausführungsform der vorliegenden Offenbarung. Fig. 5B zeigt eine schematische perspektivische Ansicht der Magneteinheit der Düseneinheit gemäß der zweiten Ausführungsform der vorliegenden Offenbarung. Fig. 5C zeigt eine schematische Draufsicht von unten des Adapters der Düseneinheit gemäß der zweiten Ausführungsform der vorliegenden Offenbarung. Fig. 5D zeigt eine schematische Draufsicht von unten der Magneteinheit der Düseneinheit gemäß der zweiten Ausführungsform der vorliegenden Offenbarung.

Bei dieser Ausführungsform umfasst die Magneteinheit ein als Positioniernase ausgebildetes Positionierelement 246, das auf der Stirnseite 245 des Magnettopfes 242 ausgebildet ist, wobei das Positionierelement 246 einteilig mit dem Magnettopf 242 ausgebildet ist. Die Positioniernase steht prismenförmig von der Stirnseite 245 des Magnettopfes 242 hervor. Die Positioniernase verjüngt sich also von ihrer Basis auf der Stirnseite 245 mit zunehmender Entfernung von der Stirnseite. Die Kopplungsfläche 232 umfasst eine entsprechend geformte Aussparung 234, in die das Positionierelement 246 eingesetzt ist, wenn der Adapter 230 und die Haltevorrichtung 220 aneinandergekoppelt sind.

Die Positioniernase umfasst zwei einander gegenüberliegende Seitenflächen 247. Die zwei Seitenflächen 247 bilden jeweils einen Winkel kleiner 90°, vorzugsweise 45°, mit einer Ebene senkrecht zur Symmetrieachse des Magnettopfes 242. Die Seitenflächen 247 bilden Auflageflächen zur Auflage in der Aussparung 234.

Bei dieser Ausführungsform sind die Form der Aussparung 234 und die Form des Positionierelements 246 so aneinander angepasst, dass sich beim Annähern der Magneteinheit 240 an die Kopplungsfläche 232 die Magneteinheit 240 selbstständig in die von der Aussparung 234 und dem Positionierelement 246 vorgegebene Orientierung positioniert (auch als "selbstzentrierend" bezeichnet). Dies ermöglicht es, die Haltevorrichtung 220 bzw. die Magneteinheit 240 ohne Aufwand stets in der vorgegebenen Orientierung zu positionieren.

Bei dieser Ausführungsform wird ein Verdrehen der Magneteinheit 240 um eine Drehachse senkrecht zur Kopplungsfläche 232 des Kopplungsbereichs 231 (in Fig. 3A, 3B parallel zur x-Achse) bis zur vorgegebenen äußeren Krafteinwirkung auf die Magneteinheit verhindert. Erst bei einer äußeren Krafteinwirkung über dem vorgegebenen Wert kann ein Verdrehen der Magneteinheit 240 um diese Drehachse ermöglicht und/oder kann die magnetische Kopplung gelöst werden. Die Seitenflächen 247 bilden dabei Reibflächen zum Abscheren der Magneteinheit 240 vom Kopplungsbereich 231.

Die Magneteinheit 240 kann an drei Auflagepunkten mit der Kontaktfläche 232 in Kontakt stehen. Das Positionierelement 246 bzw. die beiden Auflageflächen 247 des Positionierelements 246 bilden einen Auflagepunkt. Die Magneteinheit 240 kann zwei weitere Auflageelemente 248 aufweisen, die jeweils einen Auflagepunkt bilden. Die Auflageelemente 248 sind, wie gezeigt, auf der Stirnseite 245 des Magnettopfes 242 angeordnet. Dadurch kann eine kippstabile Auflage der Magneteinheit auf der Kopplungsfläche ermöglicht werden.

Gemäß der vorliegenden Erfindung wird eine Düseneinheit zur lateralen Schutzgaszufuhr für einen Laserbearbeitungskopf bereitgestellt, bei der die Schutzgasdüse und/oder das Werkstück und/oder des Laserbearbeitungskopfs vor Beschädigung bei Kollision geschützt sind.

## Patentansprüche

1. Düseneinheit (210) zur lateralen Schutzgaszufuhr für einen Laserbearbeitungskopf (100), die Düseneinheit umfassend:
- eine Schutzgasdüse (210),
- eine Haltevorrichtung (220), an der die Schutzgasdüse (210) befestigt ist,
- einen Adapter (230) zur Befestigung der Haltevorrichtung (220) am Laserbearbeitungskopf (100),
wobei die Haltevorrichtung (220) und der Adapter (230) mittels Magnetkraft lösbar aneinandergekoppelt sind.

2. Düseneinheit gemäß Anspruch 1, wobei eine Größe der Magnetkraft so gewählt ist, dass sich der Adapter (230) und die Haltevorrichtung (220) ab einer vorgegebenen äußeren Krafteinwirkung voneinander lösen.

3. Düseneinheit gemäß einem der vorstehenden Ansprüche, wobei einer von dem Adapter (230) und der Haltevorrichtung (220) als Magneteinheit (240) ausgebildet ist, und der andere von dem Adapter (230) und der Haltevorrichtung (220) als ferromagnetische Einheit ausgebildet ist.

4. Düseneinheit gemäß Anspruch 3, wobei die Magneteinheit (240) einen Magneten (241) und einen Magnettopf (242) umfasst, in der der Magnet (241) eingesetzt ist, und
wobei die ferromagnetische Einheit einen Kopplungsbereich (231) zur magnetischen Kopplung mit der Magneteinheit (240) umfasst.

5. Düseneinheit gemäß Anspruch 4, wobei die Magneteinheit (240) ein Positionierelement (244, 246) umfasst, und
wobei eine Form des Kopplungsbereichs (231) und eine Form des Positionierelements (244, 246) so aneinander angepasst sind, dass die Magneteinheit (240) in einer vorgegebenen Orientierung an der ferromagnetischen Einheit gekoppelt ist.

6. Düseneinheit gemäß Anspruch 5, wobei der Kopplungsbereich (231) und das Positionierelement (244, 246) derart geformt sind und/oder die Größe der Magnetkraft so gewählt ist, dass:
ein Verdrehen der Magneteinheit (240) um eine Drehachse senkrecht zu einer Kopplungsfläche (232) des Kopplungsbereichs (231) bis zur vorgegebenen äußeren Krafteinwirkung verhindert wird, und/oder
ein Verkippen der Magneteinheit (240) um eine Achse parallel zur Kopplungsfläche (232) des Kopplungsbereichs (231) bei einer äußeren Krafteinwirkung ermöglicht wird.

7. Düseneinheit gemäß einem der Ansprüche 4, 5 oder 6, wobei der Kopplungsbereich (231) als Vertiefung in der ferromagnetischen Einheit ausgebildet ist,
wobei ein Rand (243) des Magnettopfs (242) in die Vertiefung eingesetzt ist, und
wobei der Rand (243) des Magnettopfs (242) und/oder die Vertiefung nicht-rotationssymmetrisch ist.

8. Düseneinheit gemäß einem der Ansprüche 5 bis 7, wobei das Positionierelement (244, 246) als Positioniernase auf einer Stirnseite (245) der Magneteinheit (240) oder des Magnettopfs (242) ausgebildet ist, und
wobei der Kopplungsbereich (231) eine entsprechend geformte Aussparung (234) aufweist, in die die Positioniernase eingesetzt ist.

9. Düseneinheit gemäß Anspruch 8, wobei die Positioniernase prismenförmig von der Stirnseite (245) vorsteht.

10. Düseneinheit gemäß Anspruch 8 oder 9, wobei die Positioniernase zwei einander gegenüberliegende Seitenflächen (247) aufweist, die jeweils einen Winkel < 90° mit einer Ebene senkrecht zur Symmetrieachse des Magnettopfs (242) bilden und/oder die Auflageflächen zur Auflage in der Aussparung (234) des Kopplungsbereichs (231) bilden.

11. Düseneinheit gemäß Anspruch 8, 9 oder 10, wobei die Aussparung (234) zu einer Seite, die einer Außenseite des Magnettopfs entspricht, offen ist; und/oder
wobei die Aussparung (234) in dem Kopplungsbereich (231) und die Positioniernase auf der Stirnseite (241) jeweils an einer Position ausgebildet sind, die in Schwerkraftrichtung am weitesten unten liegt, wenn der Adapter (230) und die Haltevorrichtung (220) am Laserbearbeitungskopf (100) befestigt sind.

12. Düseneinheit gemäß einem der Ansprüche 3 bis 11, wobei die Magneteinheit (240) an drei Auflagepunkten mit der ferromagnetischen Einheit in Kontakt steht.

13. Düseneinheit gemäß einem der vorstehenden Ansprüche, wobei die Haltevorrichtung (220) ferner eine Klemmvorrichtung (221) umfasst, durch die die Schutzgasdüse (210) austauschbar befestigt ist,
wobei die Klemmvorrichtung (221) für unterschiedliche Durchmesser der Schutzgasdüse (210) einstellbar ist.

14. Düseneinheit gemäß Anspruch 13, wobei die Klemmvorrichtung (221) ein erstes Klemmelement (222) mit einer ersten V-förmigen Einkerbung und ein zweites Klemmelement (223) mit einer zweiten V-förmigen Einkerbung aufweist, wobei sich die erste Einkerbung und die zweite Einkerbung entlang einer vorgegebenen Richtung gegenüberliegen und die zwei Klemmelemente (222, 223) entlang der vorgegebenen Richtung relativ zueinander verschiebbar sind, um die Schutzgasdüse (210) zwischen den Klemmelementen (222, 223) einzuklemmen.

15. Laserbearbeitungskopf (210), umfassend:
- ein Gehäuse (110), und
- eine Düseneinheit (200) gemäß einem der vorstehenden Ansprüche,
wobei der Adapter (230) an einer Außenseite des Gehäuses (110) befestigt ist.
